# EUROPÄISCHE PATENTSCHRIFT

(11) **EP 1 510 809 B1**
(45) Veröffentlichungstag und Bekanntmachung des Hinweises auf die Patenterteilung: **10.04.2013**
(21) Anmeldenummer: 04016997.1
(22) Anmeldetag: 19.07.2004
(51) Int. Cl.: G01N 21/90, B07C 5/34

(54) **Vorrichtung zur Prüfung von Erzeugnissen**
Apparatus for inspecting articles
Appareil d'inspection d'articles

(30) Priorität: 27.08.2003 DE 10339473
(43) Veröffentlichungstag der Anmeldung: 02.03.2005
(73) Patentinhaber: Seidenader Maschinenbau GmbH, 85570 Markt Schwaben (DE)
(72) Erfinder: Grindinger, Herbert, 84453 Mühldorf a. Inn (DE); Neusser, Helmut, 85599 Parsdorf (DE); Seidenader, Nikolaus, 80638 München (DE); Wedershoven, Volker, 81667 München (DE)
(74) Vertreter: Herrmann, Uwe

(56) Entgegenhaltungen:
- EP-A- 0 433 666
- WO-A-94/08230
- DE-C- 4 202 172
- DE-U- 29 913 208
- US-A- 4 620 090
- US-A- 5 059 031
- US-A- 5 073 708
- PATENT ABSTRACTS OF JAPAN Bd. 0120, Nr. 95 (P-681), 29. März 1988 (1988-03-29) -& JP 62 228935 A (TOSHIBA CORP), 7. Oktober 1987 (1987-10-07)

## Beschreibung

Die vorliegende Erfindung betrifft eine Vorrichtung zur Prüfung von Erzeugnissen, insbesondere von Ampullen, Flaschen und dergleichen. Derartige Inspektionsvorrichtungen werden beispielsweise im Bereich der Pharmaindustrie verwendet, um zu prüfen, ob Ampullen, Fläschchen etc. oder auch deren Inhalt qualitativ und/oder quantitativ den gestellten Anforderungen entsprechen. Die Prüfung kann sich beispielsweise darauf beziehen, ob alle Fläschchen vorschriftsmäßig mit einer Kappe verschlossen sind, ob und welche Aufdrucke oder Etiketten vorhanden sind, ob die Fläschchen, Ampullen etc. beschädigt sind etc. Des Weiteren kann geprüft werden, ob ein eventueller Inhalt derartiger Gefäße hinsichtlich Konsistenz, Menge, Farbe etc. den gestellten Anforderungen entspricht. Weiterhin können beispielsweise die Dimensionen sowie die Qualität des Glaskörpers, beispielsweise das Vorhandensein von Rissen oder sonstigen Beschädigungen, derartiger Behältnisse einer Prüfung unterzogen werden. Die Erfindung betrifft eine Vorrichtung, mit der beliebige Erzeugnisse, wie beispielsweise feste, gasförmige oder flüssige Erzeugnisse geprüft werden können. Exemplarisch sind beliebige Behältnisse sowie Erzeugnisse aus der pharmazeutischen Industrie, der Vitaminindustrie, der chemischen Industrie oder beispielsweise aus der Lebensmittel- oder Getränkeindustrie zu nennen.

Vorbekannte Vorrichtungen zur Prüfung von Erzeugnissen, wie Ampullen etc., weisen einen Drehkranz auf, der in seinem Umfangsbereich eine Vielzahl von Aufnahmen für die zu prüfenden Ampullen aufweist. Der Drehkranz weist im Bereich seiner Drehachse einen Kameraturm auf, auf dem eine oder in der Regel mehrere Kameras angeordnet sind. Die Kameras dienen dazu, die zu prüfenden Erzeugnisse optisch zu erfassen. In einer Auswertungseinheit wird sodann geprüft, ob die Erzeugnisse den Erfordernissen entsprechen oder zu verwerfen sind.

Der Kameraturm ist um einen bestimmten Schwenkwinkel rotierbar ausgeführt, so dass eine Kamera, die eine zu prüfende Ampulle fixiert hat, mit dieser über einen bestimmten Schwenkbereich mitverschwenkt wird. Während dieser Schwenkbewegung kann bei vorbekannten Inspektionsgeräten vorgesehen sein, dass sich die zu prüfende Ampulle einmal um ihre eigene Achse dreht, so dass deren gesamter Umfang inspiziert werden kann. Dazu ist vorgesehen, dass die Aufnahmen des Drehkranzes mit Drehtellern versehen sind, die die Ampullen in eine Drehbewegung versetzen.

Bei Bedarf kann ebenfalls vorgesehen sein, dass die Ampullen vor dem eigentlichen Aufnahmevorgang in eine Dreh- oder Schüttelbewegung versetzt werden, um zu prüfen, ob sich in einer Flüssigkeit Partikel befinden. Dabei ist vorgesehen, dass während des Aufnahmevorgangs durch die Kamera eine Rotation der Ampullen um die eigene Achse unterbleibt.

Beiden vorgeschriebenen Varianten ist gemeinsam, dass der Kameraturm über einen vorgegebenen Winkelabschnitt mit den Ampullen, Fläschchen oder dergleichen mitverschwenkt wird, so dass die optische Erfassung der Ampulle über einen vorgegebenen Zeitraum, während sich diese mit dem Drehkranz bewegt, möglich ist.

Nachdem die Beobachtung einer Ampulle beendet ist, wird der Kameraturm zurückverschwenkt und die optische Erfassung einer weiteren Ampulle begonnen.

Dabei vollzieht sich erneut ein Verschwenken der Kamera mit der Ampulle, bis deren Erfassung abgeschlossen ist. Der vorgenannte Vorgang wiederholt sich bei vorbekannten Geräten bis zu 400 mal pro Minute. Eine derartige Oszillation erfordert aufgrund der erheblichen Masse des Kameraturms ein entsprechend groß dimensionierten Antrieb, kann unter Umständen zu Verschleißerscheinungen führen und erfordert darüber hinaus eine stabile und unter Umständen schwergewichtige Konstruktion. Die Oszillation des Kameraturms kann Geräusche mit sich bringen, die eventuell störend wirken können. Ein weiteres Problem kann sich daraus ergeben, dass sich Versorgungskabel der Kameras bei einer derartigen hochfrequenten Oszillation unter Umständen lockern können, was dazu führt, dass diese eigens fixiert werden müssen.

US 5 073 708 A offenbart eine Vorrichtung zur Prüfung von Erzeugnissen die auf einem drehbaren Körper angeordnet sind. Die Spurverfolgungsspiegel der dort offenbarten Anordnung befinden sich außerhalb der von der zu prüfenden Erzeugnissen beschrittenen Kreisbahn, und sind individuell einer speziellen Kamera zugeordnet.

Es ist die Aufgabe der vorliegenden Erfindung eine Vorrichtung zur Prüfung von Erzeugnissen der eingangs genannten Art dahingehend weiterzubilden, dass die Oszillation von Erfassungsmitteln, insbesondere von Kameras, zum Zwecke der Erfassung der sich über einen Teilabschnitt bewegenden Erzeugnisse nicht zwingend erforderlich ist.

Diese Aufgabe wird durch eine Vorrichtung zur Prüfung von Erzeugnissen gemäß Patentanspruch 1 gelöst. Vorteilhafte Weiterbildungen der Erfindung sind Gegenstand der Unteransprüche. Die erfindungsgemäße Vorrichtung weist Mittel zur Bewegung der zu prüfenden Erzeugnisse sowie Erfassungsmittel zur Erfassung von für die Erzeugnisse charakteristischen Lichtsignalen oder sonstigen Signalen auf. Ferner ist ein bewegbares Ablenk- oder Reflexionsmittel vorgesehen, mittels dessen die für die Erzeugnisse charakteristischen Lichtstrahlen oder sonstigen Signale zu den Erfassungsmitteln wenigstens während eines Teilabschnittes der Bewegung der Erzeugnisse ablenkbar oder reflektierbar sind. Das Ablenk- oder Reflexionsmittel wird dementsprechend zumindest während eines Teilabschnittes der Bewegung der Erzeugnisse bewegt, so dass die Erzeugnisse während dieses Teilabschnittes der Bewegung mittels der Erfassungsmittel geprüft werden können. Das Ablenk- oder Reflexionsmittel leitet die von den zu prüfenden Erzeugnissen ausgehenden Lichtstrahlen oder beliebige andere Signale während der Bewegung der Erzeugnisse auf das Erfassungsmittel, d. h. beispielsweise die Kamera. Ist die Beobachtung eines Erzeugnisses, beispielsweise einer Ampulle, abgeschlossen, kann das Ablenk- oder Reflexionsmittel zurückbewegt werden und die Beobachtung der nächsten Probe begonnen werden.

Im Unterschied zu dem oben skizzierten Stand der Technik ist es somit nicht zwingend erforderlich, dass ein Kameraturm derart bewegt wird, dass er den zu prüfenden Erzeugnissen wiederholt nachgeführt wird. Erfindungsgemäß ist es ausreichend, wenn lediglich das Ablenk- oder Reflexionsmittel in entsprechende Bewegungen versetzt wird, wobei die Erfassungsmittel, d. h. beispielsweise die Kameras ortsfest angeordnet sein können. Dadurch läßt sich der Vorteil erzielen, dass die mechanische Beanspruchung sensibler Erfassungsgeräte sowie von deren Verkabelung auf ein Minimum reduziert ist, da diese in einer vorteilhaften Ausgestaltung der Erfindung nicht mit den sich bewegenden Erzeugnissen bewegt werden. Des Weiteren ergibt sich der Vorteil, dass vorzugsweise nur das Ablenk- oder Reflexionsmittel bewegt werden muss, das in der Regel mit einer sehr viel geringeren Masse ausgeführt werden kann, als der vorgenannte Kameraturm mit mehreren daran angeordneten Kameras. Die zu bewegende Masse kann dementsprechend wesentlich geringer ausgeführt werden, was eine geringere Anforderung an die mechanische Stabilität mit sich bringt.

Besonders vorteilhaft ist es, wenn die Prüfung auf der Erfassung von Lichtstrahlen beruht, wobei die Erfassungsmittel in diesem Fall eine oder mehrere Kameras sind, die das reflektierte oder abgelenkte Bild der Erzeugnisse aufnehmen. In bevorzugter Ausgestaltung der Erfindung werden die Erzeugnisse zumindest während des Zeitraums der Beobachtung beleuchtet.

Zur Prüfung der Erzeugnisse können außer Lichtstrahlen beliebige andere ablenkbare oder reflektierbare Strahlen bzw. elektromagnetische Wellen, die für die zu prüfenden Erzeugnisse charakteristische Signale liefern, verwendet werden, sofern aus diesen Rückschlüsse auf die Beschaffenheit der Erzeugnisse gezogen werden können.

Weiterhin kann vorgesehen sein, dass die Mittel zur Bewegung der zu prüfenden Erzeugnisse einen Drehkranz umfassen, so dass die Bewegung der Erzeugnisse wenigstens abschnittsweise eine Kreisbewegung ist. In diesem Falle ist vorzugsweise vorgesehen, dass das Ablenk- oder Reflexionsmittel ebenfalls eine Schwenkbewegung derart durchführt, dass das auf der Kreisbahn bewegte Erzeugnis über einen vorgegebenen Bahnabschnitt von den Erfassungsmitteln beobachtet werden kann. Selbstverständlich ist es ebenso möglich, dass die Erzeugnisse keine Kreisbahn, sondern eine beliebige Krümmungen oder auch eine gerade Bahn durchlaufen. Bevorzugt ist jedoch, dass die Erzeugnisse im Umfangsbereich eines Drehkranzes angeordnet sind und nacheinander geprüft werden. Dementsprechend ist in einer vorzugsweisen Ausgestaltung der Erfindung vorgesehen, dass die Bewegung der Erzeugnisse wenigstens abschnittsweise eine Kreisbewegung ist und dass das Ablenk- oder Reflexionsmittel rotierbar ist, so dass die Signale wenigstens während eines Winkelabschnittes der Kreisbewegung auf die Erfassungsmittel ablenkbar bzw. reflektierbar sind.

Besonders vorteilhaft ist es, wenn es sich bei dem Reflexionsmittel um einen einoder zweiseitig reflektierenden Spiegel handelt. Es kann vorgesehen sein, dass mehrere Erfassungsmittel angeordnet sind, wobei ein Teil der Erfassungsmittel über die eine Seite des Spiegels und ein weiterer Teil der Erfassungsmittel über die andere Seite des Spiegels mit Lichtstrahlen bzw. charakteristischen Signalen der Erzeugnisse versorgt werden.

Als Ablenkmittel kommen beliebige Medien infrage, die den darauf treffenden Lichtstrahl oder das Signal gegenüber der ursprünglichen Richtung ablenken.

Es kann vorgesehen sein, dass die Erfassungsmittel Kameras sind, die übereinander und/oder nebeneinander angeordnet sind. Bei der Anordnung mehrerer Kameras übereinander kann ein Erzeugnis in mehreren vertikal beabstandeten Bereichen analysiert werden. Die Anordnung von mehreren Kameras, die in Umfangsrichtung beabstandet sind, kann vorzugsweise dazu dienen, mehrere Erzeugnisse gleichzeitig prüfen zu können.

Die Anordnung der Erfassungsmittel im Raum ist beliebig. Die Erfassungsmittel, insbesondere die Kameras können horizontal, vertikal oder geneigt angeordnet sein. Die Kameras können in ihrer Position veränderbar sein, so dass beispielsweise je nach Bedarf eine zwischen einer horizontalen Ausrichtung und einer geneigten Ausrichtung gewechselt werden kann. In weiterer Ausgestaltung der Erfindung können die Kameras höhenverstellbar ausgeführt sein, so dass die Erzeugnisse in unterschiedlichen Ebenen geprüft werden können.

Besonders vorteilhaft ist es, wenn Steuerungsmittel vorgesehen sind, die die Bewegung des Ablenk- oder Reflexionsmittels mit der Bewegung der Erzeugnisse elektronisch synchronisieren. Ist die Prüfung einer Probe abgeschlossen, wird z. B. ein als Reflexionsmittel dienender Spiegel zurückbewegt, um die Prüfung der nachfolgenden Probe zu ermöglichen. In dieser Ausgestaltung der Erfindung sind diese Oszillationen des Spiegels mit der Bewegung der Erzeugnisse, beispielsweise mit der Bewegungsgeschwindigkeit einer Drehkranzes, der die Erzeugnisse in seinem Umfangsbereich aufnimmt, elektronisch synchronisiert. Eine derartige elektronische Synchronisierung hat den weiteren Vorteil, dass eine flexible Steuerung der Ablenk- oder Reflexionsmittel realisierbar ist. Beispielsweise kann die Verfolgungsphase, während der das Erzeugnis geprüft wird, sowie die Rückführungsphase, in der das Ablenk- oder Reflexionsmittel auf die nachfolgende Probe eingestellt wird, optimal eingestellt und den jeweiligen Erfordernissen angepasst werden.

In weiterer Ausgestaltung der Erfindung kann vorgesehen sein, dass Drehteller angeordnet sind, auf denen die Erzeugnisse plaziert werden können. Derartige Drehteller ermöglichen es, die Erzeugnisse während der Beobachtung durch die Erfassungsmittel ihrerseits um die eigene Achse bzw. die Achse des Drehtellers zu rotieren. Auf diese Weise ist die Beobachtung bzw. Prüfung der Erzeugnisse in dem gesamten Umfang oder zumindest in einem Teilbereich derselben möglich.

Des Weiteren können derartige Drehteller dazu dienen, in einer Ampulle oder in einem Fläschchen befindliche Flüssigkeiten aufzumischen und den Rotationsvorgang des Drehtellers zu beenden, sobald der Prüfungsvorgang durch die Erfassungsmittel beginnt. Auf diese Weise kann festgestellt werden, ob die Flüssigkeit oder ein Gas Feststoffe enthält, bzw. mit welcher Sedimentationsgeschwindigkeit diese zum Boden der Ampulle oder des Fläschchens absinken.

In weiterer Ausgestaltung der vorliegenden Erfindung ist je Drehteller ein eigener Antrieb, vorzugsweise ein Synchronmotor, zur Rotation des Drehtellers vorgesehen. Eine derartige Ausgestaltung der vorliegenden Erfindung hat den Vorteil, dass jeder Drehteller unabhängig voneinander angesteuert werden kann und programmierbar ist. Dabei ist beispielsweise denkbar, dass ein Teil der Drehteller vor und ein Teil der Drehteller während der Prüfung mittels der Erfassungsmittel in eine Rotationsbewegung versetzt wird. Weist jeder Drehteller einen eigenen Antrieb auf, kann die Rotation der Drehteller probenspezifisch ausgeführt werden. Sofern eine Rotation der Drehteller nicht erforderlich ist, kann diese unterbleiben, was je nach Erzeugnis individuell wählbar sein kann. Die Drehteller können lediglich die Funktion erfüllen, die darauf angeordneten Erzeugnisse zu tragen.

Grundsätzlich kann vorgesehen sein, dass die die Erzeugnisse tragenden Drehteller oder Teller dazu dienen, Licht von unten in die darauf befindlichen Erzeugnisse einzuführen bzw. passieren zu lassen.

Ein weiterer Vorteil einer derartigen Ausgestaltung der Erfindung ist es, dass ein externes Rotationsmittel, das die Drehteller in eine Rotationsbewegung versetzt, während diese sich im Bereich des Rotationsmittels befinden, nicht erforderlich ist. Derartige vorbekannte Rotationsmittel weisen einen Riemenantrieb auf, der die Proben vor oder während der Prüfung mittels der Erfassungsmittel in eine Rotationsbewegung versetzt. Der dabei unter Umständen zu beobachtende Verschleiß tritt bei einer Ausgestaltung der Erfindung, bei der jeder Drehteller über einen eigenen Antrieb verfügt, nicht auf.

In bevorzugter Ausgestaltung der vorliegenden Erfindung sind Beleuchtungsmittel zum Be- oder Durchleuchten der Erzeugnisse vorgesehen. Ob eine Probe be- oder durchleuchtet wird hängt im wesentlichen davon ab, welche Eigenschaften der Probe, d. h. beispielsweise der Ampulle oder von deren Inhalt geprüft werden sollen.

Weitere Einzelheiten und Vorteile der vorliegenden Erfindung ergeben sich aus dem in der Zeichnung dargestellten Ausführungsbeispiel.

Es zeigen:
- Fig. 1:: eine schematische Draufsicht auf eine Vorrichtung zur Prüfung von Erzeugnissen gemäß der Erfindung und
- Fig. 2:: eine perspektivische Darstellung einer weiteren Ausführungsform der Erfindung.

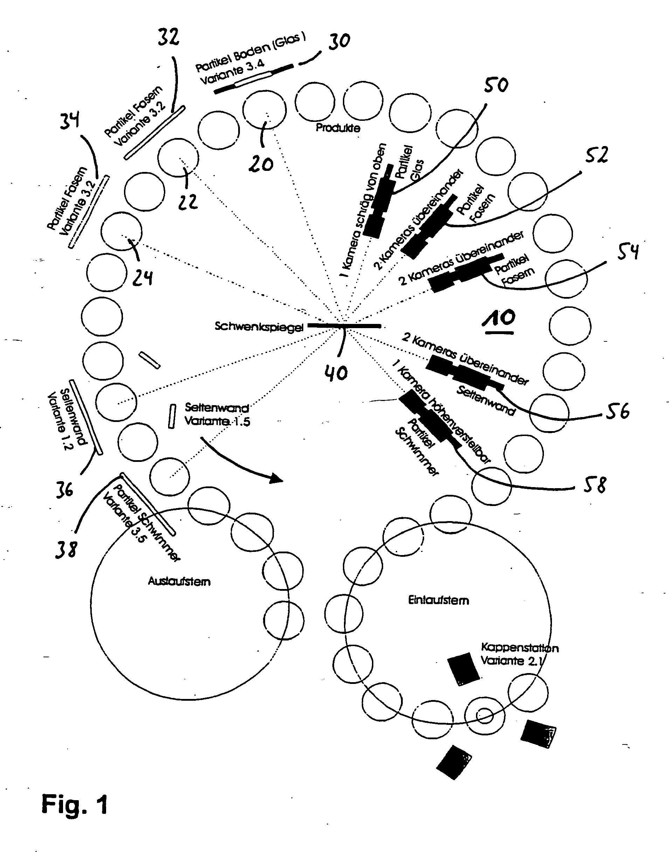

Fig. 1 zeigt den Drehkranz 10 mit darauf kreisförmig angeordneten Ampullen. Der Drehkranz 10 ist gemäß Pfeilrichtung rotierbar. In dessen Zentrum befindet sich der zumindest über einen Teilwinkelbereich verschwenkbare Spiegel 40, dessen Rotationsachse mit der des Drehkranzes 10 zusammenfällt. Außerhalb des Drehkranzes 10 befinden sich die Beleuchtungsmittel 30, 32, 34, 36 und 38. Des Weiteren sind die Kameras 50, 52, 54, 56 und 58 vorgesehen, die das von dem Spiegel 40 reflektierte Licht erfassen und an eine Auswertungseinheit weiterleiten.

Ampullen, die sich in Position der Ampulle 20 befinden, werden mittels des Leuchtschirmes 30 beleuchtet. Das durch die Ampullen 20 hindurchtretende Licht wird an dem Spiegel 40 reflektiert und von der Kamera 50 erfasst. Die Kamera 50 ist schräg nach unten ausgerichtet und dient dazu, zu ermitteln, ob sich im Bodenbereich der Ampullen Glaspartikel befinden. Während der Bewegung der Ampulle 20 im Bereich des Leuchtmittels 30 wird die Ampulle 20 mittel eines Synchronmotors über einen Drehteller in eine Rotationsbewegung versetzt, so dass die Ampulle 20 zumindest einmal umläuft, während sie sich an dem Leuchtschirm 30 vorbeibewegt.

Während der durch die Rotation des Drehkranzes 10 bedingten Kreisbewegung der Ampulle 20 wird der Spiegel 40 verschwenkt, so dass das durch die Ampulle 20 hindurchtretende Licht während eines bestimmten Winkelbereiches der Kreisbahnbewegung der Ampulle 20 von dem Spiegel auf die Kamera 50 reflektiert wird, so dass eine Prüfung der Ampulle 20 während ihrer Bewegung auf der Kreisbahn möglich ist.

Nach Durchlaufen eines vorbestimmten Winkelsegmentes wird der Spiegel 40 zurückverschwenkt und die Prüfung der nächsten Ampulle vorgenommen, wobei der Spiegel 40 dabei erneut verschwenkt wird, um die von der Ampulle ausgehenden Lichtstrahlen oder sonstigen Signale auf die Kamera oder Kameras zu leiten. Dieser Vorgang wiederholt sich fortlaufend, so dass der Spiegel 40 eine Oszillationsbewegung durchführt, deren Frequenz von der Rotationsgeschwindigkeit des Drehkranzes 10 abhängt.

Die Ampullen 22 und 24 befinden sich im Bereich der Leuchtmittel 32 und 34. Das durch diese Proben hindurchtretende Licht wird an dem Schwenkspiegel 40 auf die Kameras 52 und 54 geleitet. Dabei handelt es sich jeweils um zwei übereinander angeordnete Kameras, so dass unterschiedliche Bereiche der Ampullen 22 und 24 geprüft werden können. Im vorliegenden Ausführungsbeispiel wird hier das Vorhandensein von Partikeln und Fasern in den Ampullen 22 und 24 geprüft.

Wie aus Fig. 1 weiter hervorgeht, ist der Spiegel beidseitig reflektierend ausgeführt. Er ermöglicht, dass das von den Leuchtmitteln 36 und 38 ausgehende und die Proben 26 und 28 durchdringende Licht auf die Kameras 56 und 58 reflektiert wird. Die übereinander angeordneten Kameras 56 dienen zur Prüfung der Seitenwand der Ampulle 26. Während des Passierens des Leuchtmittels 36 wird die Ampulle 26 derart rotiert, dass sie einmal umläuft, so dass der gesamte Seitenwandbereich mittels der Kamera 56 geprüft werden kann.

Die Ampulle 28 wird vor ihrem Eintreffen an dem Leuchtschirm 38 rotiert. Diese Rotationsbewegung wird während ihrer Bewegung an dem Leuchtschirm 38 vorbei unterbunden, um prüfen zu können, ob in der in der Ampulle 38 befindlichen Lösung Partikel vorhanden sind.

Bei der Kamera 56 handelt es sich um zwei übereinander angeordnete Kameras, mittels derer unterschiedliche Bereiche der Seitenwand geprüft werden können. Die Kamera 58 ist höhenverstellbar ausgeführt.

Nach Durchlaufen sämtlicher Prüfstationen verlassen die Ampullen über den Auslaufstern die Prüfvorrichtung und können sodann weiterverarbeitet bzw. abgepackt werden. Die in Fig. 1 dargestellten Ampullen durchlaufen nacheinander die vorstellten Prüfstationen und sind auf diese Weise mittels einer Inspektionsmaschine hinsichtlich unterschiedlicher Kriterien prüfbar. Durch das Vorhandensein mehrerer Kameras, die teils übereinander teils in Umfangsrichtung beabstandet angeordnet sind, lassen sich mehrere Ampullen gleichzeitig prüfen.

Wie aus Fig. 1 hervorgeht, ist es zur Prüfung der Ampullen lediglich notwendig, dass der Spiegel die vorgeschriebene Bewegung ausführt, d. h. wiederholt die Bewegung der Ampullen verfolgt und sodann zurückverschwenkt wird, um die Prüfung der nachfolgenden Probe aufzunehmen. Die Kameras selbst müssen eine derartige Oszillationsbewegung nicht durchführen, sondern können während der Prüfung ortsfest angeordnet sein. Dies schließt jedoch nicht aus, dass die Kameras beispielsweise höhenverstellbar oder in einer seitlichen Richtung oder in ihrem Neigungswinkel verstellbar sind.

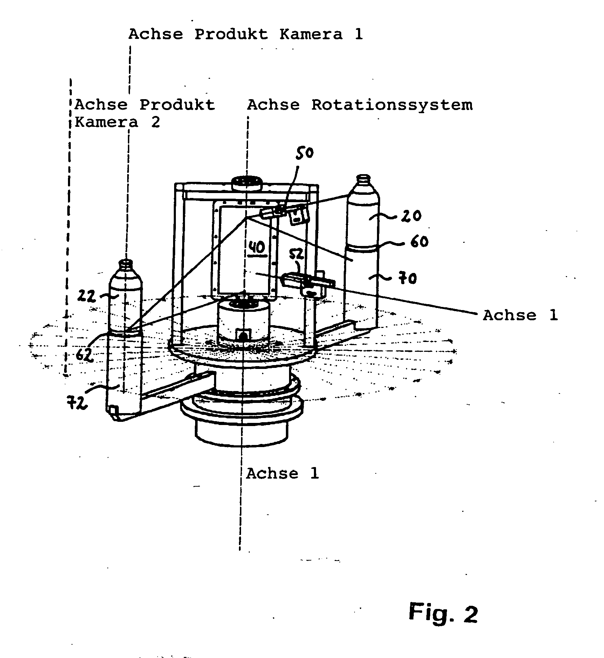

Fig. 2 zeigt in einer perspektivischen Darstellung eine Ausführungsform der Erfindung, bei der zum Zwecke der übersichtlichen Darstellung nur zwei Ampullen 20, 22 dargestellt sind. Die Ampullen 20, 22 befinden sich auf Drehtellern 60, 62, die jeweils unabhängig voneinander durch Synchronmotoren 70, 72 angetrieben werden. Des Weiteren sind zwei Kameras 50, 52 vorgesehen, die die an dem schwenkbaren Spiegel 40 reflektierten Lichtstrahlen aufnehmen. Das Funktionsprinzip der Vorrichtung gemäß Fig. 2 entspricht dem zu Fig. 1 erläuterten. Der in Fig. 2 mit radial verlaufenden Linien dargestellte Kreis symbolisiert die möglichen Positionen der Drehteller mit darauf angeordneten Ampullen.

Das Vorhandensein von unabhängig voneinander betreibbaren Antrieben, insbesondere Synchronmotoren, bringt den Vorteil mit sich, dass jede Ampulle 20 entsprechend dem gewünschten Prüfergebnis unterschiedlich angetrieben und angehalten werden kann, so dass beispielsweise mit ein und derselben Vorrichtung in einem Arbeitsgang geprüft werden kann, ob beispielsweise die Seitenwand, die Kappe etc. fehlerfrei sind oder ob in der Probe Partikel vorhanden sind.

Die Vorrichtungen gemäß Fig. 1 und 2 weisen nicht dargestellte Steuerungsmittel auf, die bewirken, dass die Oszillationsbewegung des Spiegels 40 elektronisch mit der Bewegung des Drehkranzes 10 synchronisiert ist.

Der Einsatz der erfindungsgemäßen Inspektionsmaschinen ist nicht auf die Pharmaindustrie beschränkt, sondern grundsätzlich bei der Prüfung beliebiger Erzeugnisse denkbar, beispielsweise im Bereich der Lebensmittelindustrie, der Getränkeindustrie, der Vitaminindustrie oder auch im Bereich der chemischen Industrie.

## Patentansprüche

1. Vorrichtung zur Prüfung von Erzeugnissen, insbesondere von Ampullen, Flaschen und dergleichen, mit
(i) einem Drehkranz (10) zur wenigstens abschnittsweisen Kreisbewegung der zu prüfenden Erzeugnisse,
(ii) Erfassungsmitteln (50, 52, 54, 56, 58) zur Erfassung von für die Erzeugnisse charakteristischen Lichtstrahlen oder sonstigen Signalen,
(iii) einem verschwenkbaren Spiegel (40), und
(iv) Beleuchtungsmitteln (30, 32, 34, 36, 38),
**dadurch gekennzeichnet,**
**dass** der Drehkranz (10) derart ausgeführt ist, dass die Erzeugnisse im Rahmen Ihrer Kreisbewegung an den Beleuchtungsmittel (30, 32, 34, 36, 38) vorbeigefuhrt werden,
**dass** die Rotationsachse des Spiegels (40) mit der des Drehkranzes (10) zusammenfällt, und
**dass** die Lichtstrahlen oder sonstigen Signale wenigstens während eines Winkelabschnittes der Kreisbewegung der Erzeugnisse von diesen auf den Spiegel gelangen und zu den Erfassungsmitteln (50, 52, 54, 56, 58) reflektiert werden.

2. Vorrichtung nach Anspruch 1, **dadurch gekennzeichnet, dass** die Erfassungsmittel eine oder mehrere Kameras sind.

3. Vorrichtung nach einem der vorhergehenden Ansprüche, **dadurch gekennzeichnet, dass** es sich bei dem Spiegel um einen einseitig reflektierenden Spiegel handelt.

4. Vorrichtung nach Anspruch 1 oder 2, **dadurch gekennzeichnet, dass** es sich bei dem Spiegel um einen zweiseitig reflektierenden Spiegel handelt.

5. Vorrichtung nach einem der vorhergehenden Ansprüche, **dadurch gekennzeichnet, dass** die Erfassungsmittel Kameras sind, die übereinander und/oder nebeneinander angeordnet sind.

6. Vorrichtung nach einem der vorhergehenden Ansprüche, **dadurch gekennzeichnet, dass** mehrere in Umfangsrichtung der Kreisbahn beabstandete Erfassungsmittel, insbesondere Kameras, vorgesehen sind.

7. Vorrichtung nach einem der vorhergehenden Ansprüche, **dadurch gekennzeichnet, dass** Steuerungsmittel vorgesehen sind, die die Bewegung des Spiegels mit der Bewegung der Erzeugnisse elektronisch synchronisieren.

8. Vorrichtung nach einem der vorhergehenden Ansprüche, **dadurch gekennzeichnet, dass** rotierbare Teller vorgesehen sind, auf denen die Erzeugnisse angeordnet sind.

9. Vorrichtung nach Anspruch 8, **dadurch gekennzeichnet, dass** für jeden der rotierbaren Teller ein eigener Antrieb, vorzugsweise ein Synchronmotor, zur Rotation des Tellers vorgesehen ist.

10. Vorrichtung nach einem der vorhergehenden Ansprüche, **dadurch gekennzeichnet, dass** Beleuchtungsmittel zum Be- oder Durchleuchten der Erzeugnisse vorgesehen sind.

## Claims

1. An apparatus for inspecting products, in particular ampoules, bottles and the like, comprising
(i) a turntable (10) for an at least partial circular movement of the products to be inspected;
(ii) detection means (50, 52, 54, 56, 58) for detecting light beams or other signals characteristic for the products;
(iii) a pivotable mirror (40); and
(iv) lighting means (30, 32, 34, 36, 38),
**characterised in that**
the turntable (10) is designed such that the products are led past the lighting means (30, 32, 34, 36, 38) in the course of their circular movement;
**in that** the axis of rotation of the mirror (40) coincides with that of the turntable (40); and
**in that** the light beams or other signals move from the products to the mirror at least during an angular section of the circular movement of the products and are reflected to the detection means (50, 52, 54, 56, 58).

2. An apparatus in accordance with claim 1, **characterised in that** the detection means are one or more cameras.

3. An apparatus in accordance with one of the preceding claims, **characterised in that** the mirror is a mirror reflective at one side.

4. An apparatus in accordance with claim 1 or claim 2, **characterised in that** the mirror is a mirror reflective at two sides.

5. An apparatus in accordance with one of the preceding claims, **characterised in that** the detections means are cameras which are arranged above one another and/or next to one another.

6. An apparatus in accordance with one of the preceding claims, **characterised in that** a plurality of detections means, in particular cameras, are provided spaced apart in the peripheral detection of the circular path.

7. An apparatus in accordance with one of the preceding claims, **characterised in that** control means are provided which electronically synchronise the movement of the mirror with the movement of the products.

8. An apparatus in accordance with one of the preceding claims, **characterised in that** rotatable plates are provided on which the products are arranged.

9. An apparatus in accordance with claim 8, **characterised in that** a separate drive, preferably a synchronous motor, is provided for each of the rotatable plates for rotating the plate.

10. An apparatus in accordance with one of the preceding claims, **characterised in that** lighting means are provided for lighting or shining through the products.

## Revendications

1. Dispositif destiné au contrôle de produits, notamment d'ampoules, de bouteilles et similaires, avec
(i) une couronne rotative (10) pour le mouvement circulaire au moins par section des produits à contrôler,
(ii) des moyens de saisie (50, 52, 54, 56, 58) pour la saisie de rayons lumineux ou de signaux divers caractéristiques pour les produits,
(iii) un miroir pivotant (40) et
(iv) des moyens d'éclairage (30, 32, 34, 36, 38)
**caractérisé**
**en ce que** la couronne rotative (10) est construite de sorte que les produits sont transportés dans le cadre de leur mouvement circulaire en passant devant les moyens d'éclairage (30, 32, 34, 36, 38),
**en ce que** l'axe de rotation du miroir (40) coïncide avec celui de la couronne rotative (10), et
**en ce que** les rayons lumineux ou les autres signaux parviennent pendant une section angulaire du mouvement circulaire des produits de ceux-ci sur le miroir et sont réfléchis vers les moyens de saisie (50, 52, 54, 56, 58).

2. Dispositif selon la revendication 1, **caractérisé en ce que** les moyens de saisie sont une ou plusieurs caméras.

3. Dispositif selon une quelconque des revendications précédentes, **caractérisé en ce que** dans le cas du miroir, il s'agit d'un miroir réfléchissant unilatéralement.

4. Dispositif selon les revendications 1 ou 2, **caractérisé en ce que** dans le cas du miroir, il s'agit d'un miroir réfléchissant bilatéralement.

5. Dispositif selon une quelconque des revendications précédentes, **caractérisé en ce que** les moyens de saisie sont des caméras qui sont disposées les unes au-dessus des autres ou les unes à côté des autres.

6. Dispositif selon une quelconque des revendications précédentes, **caractérisé en ce que** plusieurs moyens de saisie espacés dans le sens de la circonférence du carrousel, notamment des caméras, sont prévus.

7. Dispositif selon une quelconque des revendications précédentes, **caractérisé en ce que** des moyens de commande sont prévus, qui synchronisent électriquement le mouvement du miroir avec le mouvement des produits.

8. Dispositif selon une quelconque des revendications précédentes, **caractérisé en ce que** des plateaux rotatifs sont prévus, sur lesquels les produits sont disposés.

9. Dispositif selon la revendication 8, **caractérisé en ce que**, pour chacun des plateaux rotatifs, un entraînement individuel, de préférence un moteur synchronisé, est prévu pour la rotation du plateau.

10. Dispositif selon une quelconque des revendications précédentes, **caractérisé en ce que** des moyens d'éclairage sont prévus pour éclairer ou mirer les produits.
